# EUROPEAN PATENT APPLICATION

(11) **EP 1 452 270 A1**
(43) Date of publication of application: **01.09.2004**
(21) Application number: 03425129.8
(22) Date of filing: 28.02.2003
(51) Int. Cl.: B23Q 39/02, B23Q 11/00, B23P 23/02

(54) **Apparatus for machining brackets of motorcar disk brakes**

(71) Applicant: VIGEL S.p.A., I-10071 Borgaro Torinese (Torino) (IT)
(72) Inventor: Cavallo, Giorgio, 10071 Borgaro Torinese (TO) (IT); Martinis, Marco, 10136 Torino (IT)
(74) Representative: Spandonari, Carlo

(57) **Abstract**

An apparatus for machining motorcar disk brake brackets and caliper blocks, comprises a tool-holding machining head (34), slidable along vertical guides (36) carried by a column movable along two horizontal axes (X, Z), with respect to a workpiece held on a workpiece-holding device (88), and a tool-changing magazine (82). The machining head (34) carries at least one vertical mill-holding spindle (44, 46) in a position horizontally nearer to the column (30), and at least two vertical drill-holding spindles (52-58) in a position farther from the column. The tool-changing magazine (82) is arranged for cooperating with said drill-holding spindles (52-58) for changing their tools by moving the machine head.

## Description

The present invention relates to an apparatus for machining parts, particularly brackets, of motorcar disk brakes.

As well known in the art, production of disk brake parts, such as brackets and caliper blocks, starts from a blank consisting generally of a workpiece cast in iron or aluminum, which undergoes a set of machining steps comprising milling, facing, boring, drilling and tapping, which operations may be made along different axes.

An approach that is often adopted nowadays in the mass production of brackets and caliper blocks is to set up a highly automated machining line, which is typically capable of a cycle time of about 20 see/cycle, giving rise to a production of the order of a few thousands pieces/day (i.e., a few hundreds of pieces/hour). The drawback of such approach is that the high rigidity of the dedicated line makes the line obsolete as soon as the production is changed. If such a change takes place prematurely with respect to the initial forecast, e.g. where a motorcar model has not been successful, this may cause a serious economic damage, since not always the line can be equipped for another production, and the investment in the equipment is then lost.

A highly flexible approach is, on the other hand, to perform machining in a machining center. This, however, requires a few minutes for one work cycle, and consequently this approach is economically viable only where the production required is less than 20 pieces/hour, as in the case of brackets and caliper blocks for lorries, or for luxury cars.

When the production required is of the order of 50 to 100 pieces/hour, or when the lifetime of a model is uncertain, it is known to machine brackets and caliper blocks of disk brakes by means of apparatus as described in EP 1 222 027 A1. Such apparatus is provided with a plurality of motorized tool-holding spindles which are horizontally and pivotally supported by a machining head that is slidable along two perpendicular rectilinear guides, and a vertical rectilinear guide as well. Motion to the machining head is imparted by motor means which are usually under numeric control, as well as the electric motors driving the spindles. A swapping device, comprising a workpiece-holding drum capable of rotating around a horizontal axis parallel to axis X, is provided with motor means capable of driving the drum through tipping strokes between two alternative positions reciprocally set at 180° to each other. A set of different tools is carried by a mechanized tool-changing magazine, in such a position that they can be selectively grasped by the spindles of the machining head.

Although such apparatus can machine simultaneously a plurality of workpieces, they have the main drawback of being very cumbersome.

Moreover, another drawback of such apparatus is the long distance, due to the horizontal arrangement of the spindles, between the working-edge of the tool and the guides supporting the machining head, which distance, as well known to the person skilled in the art, should be minimized in order to enhance the machining accuracy.

Also, in such known apparatus, the tool-changing magazine is arranged above the swapping device, so that it does not encumber the machining area. However, the magazine so arranged is difficult to be approached by an operator in order to load and unload the tools.

Accordingly, the main object of the present invention is to provide an apparatus for machining parts of disk brakes, particularly brackets, which is less cumbersome and more compact with respect to the prior art, in such a way as to reduce its size and minimize the distance between the working-edge of the tools and the guides supporting the machining head.

This object and other aims and advantages that will become better apparent from the description that follows, are achieved by an apparatus having the features recited in claim 1, while the other claims state other advantageous features of the invention.

A preferred embodiment of the present invention will be now described, with reference to the attached drawings shown by way of non limiting example, wherein:
Fig. 1 is a diagrammatical lateral view of an example of a brake bracket, which is intended to be machined with the apparatus of the invention;
Fig. 2 is a diagrammatical plan view of the brake bracket of Fig. 1;
Fig. 3 is a side elevation view of an apparatus according to the invention;
Fig. 4 is a diagrammatical plan view of the apparatus of Fig. 3;
Fig. 5 is a diagrammatical front elevation view of the apparatus of Fig. 3;
Fig. 6 is a diagrammatical view in longitudinal cross-section of a machining head belonging to the apparatus of Figs. 3 to 5;
Fig. 7 is a cross-section view, made along line VII-VII of Fig. 6, of the machining head;
Fig. 8 is a cross-section view, made along line VIII-VIII of Fig. 6, of the machining head.

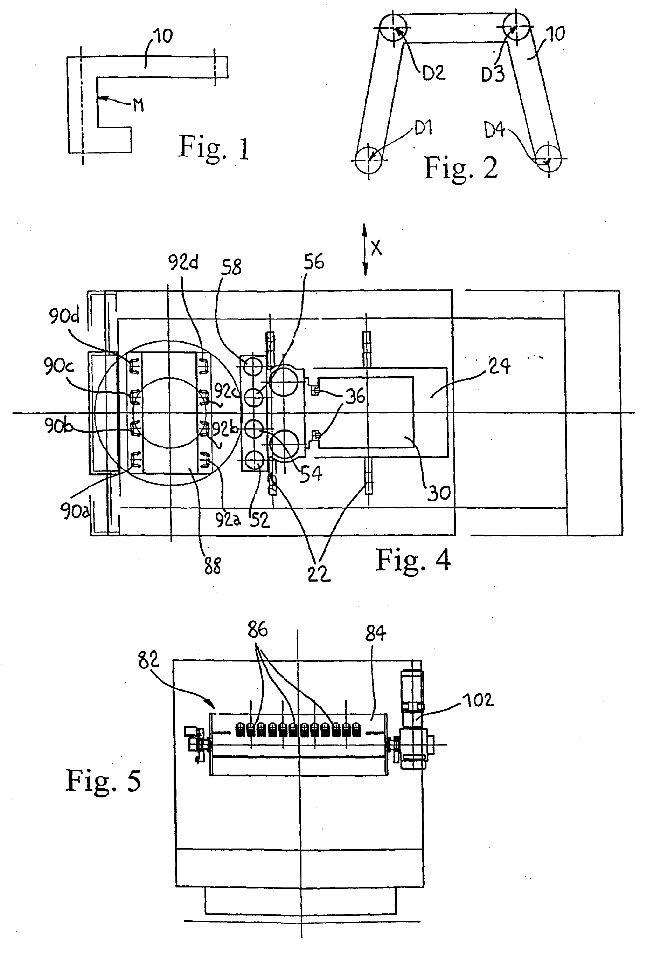

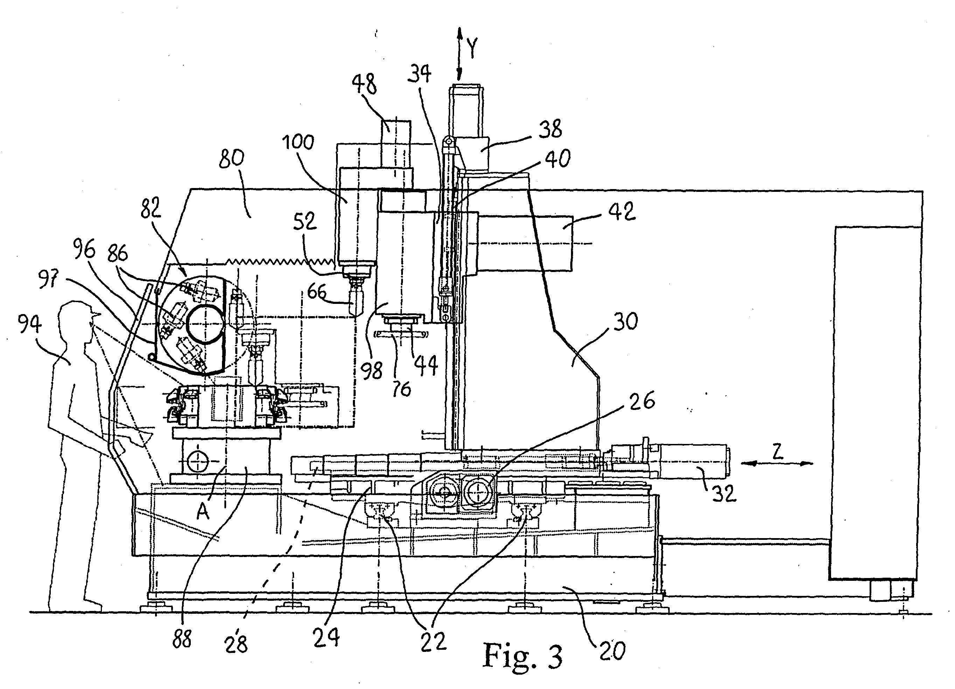

Figs. 1 and 2 show a typical workpiece 10, as known to those skilled in the art, which is intended to be machined with the apparatus of the invention in order to obtain a disc-brake bracket. Such workpiece 10 typically requires a set of machining operations, such as drilling in D1, D2, D3 and D4, and milling in M.

With reference to Figs. 3 to 5, a bedplate 20 bears horizontal, transversal roller guides 22, which slidably support a truck 24. The truck is drivable along a horizontal axis of motion X by motor means 26, through a ball screw (not shown). Truck 24 is also provided with horizontal guides 28 crossing guides 22. Guides 28 also slidably support a column 30, which is driven by motor means 32 for moving along a horizontal axis Z, also through a ball screw (not shown). Finally, column 30 slidably supports a machining head 34 on vertical guides 36 (axis Y), which is moved by motor means 38, carried by column 30, through a ball screw 40.

Machining head 34 is further provided with an electric motor 42 for driving two vertical mill-holding spindles 44, 46, and with two electric motors 48, 50 for driving four vertical drill-holding spindles 52-58, as disclosed below. Mill-holding spindles 44, 46 are pivotally supported by a first housing 98 that is slidable along vertical guides 36, while drill-holding spindles 52-58 are pivotally supported, at a raised position with respect to said mill-holding spindles 44, 46, by a second housing 100 that is attached to first housing 98.

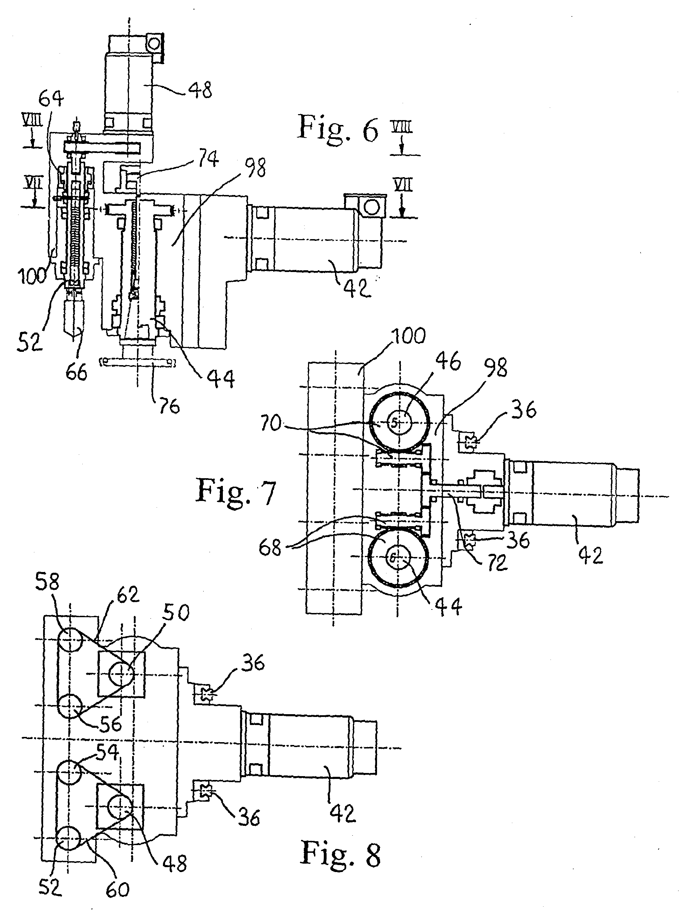

Having now reference to Figs. 6 to 8, two adjacent drill-holding spindles 52, 54 of machining head 34 derive their motion, via a first belt drive 60, from a first electric motor 48, while the other drill-holding spindles 56, 58, via a second belt drive 62, from a second electric motor 50. Both belt drives 60, 62 are designed with a an appropriate driving ratio so that a high speed (e.g. 4500 rpm) is imparted to spindles 52-58. Hollow hydraulic actuators such as 64 are operated to lock and unlock the tool-holders when automatically changing their tool, as further explained below. Drill-holding spindles 52-58 are intended mainly for drilling or threading four workpieces simultaneously, such as disk brake bracket 10, by successive steps in D1, D2, D3 and D4.

It should be noted that the drill-holding spindles can be used to perform other kind of machining than mere drilling, such as boring or light milling.

The pair of mill-holding spindles 44, 46 derive their motion, via respective worm gearings 68, 70 and a driving gearing 72, from electric motor 42, with a gear ratio such that will provide a low speed (e.g. 500 rpm). Hydraulic means such as 74 are assisted by hydraulic actuators to lock and unlock the tool-holders when manually changing their tool, which are intended for milling simultaneously two disk brake brackets 10 in M.

With further reference to Figs. 3 and 5, a frame 80 rising from bedplate 20 carries a mechanized tool-changing magazine 82, known per se, for instance of the type having a drum 84 which is capable of bringing different tools such as 86 for selective grasping by spindles 52-58 of machining head 34, such magazine being operated by motor means 102.

Finally, bedplate 20 supports a vertical-axis rotating table 88 as known per se, arranged in front of column 30 and adapted to support two rows 90a-d, 92a-d of four workpieces each, which during machining are aligned parallelly to axis X. Table 88 is drivable to rotate around its vertical axis A, via a rack-and-pinion gearing (not shown), by motor means (also not shown), through revolving strokes between the position shown in the drawings and a position that is rotated by 180°. A shield 96 is provided in order to safeguard workman 94 from the machining area. Moreover, magazine 82 is provided with an additional shield 97, in order to allow the workman to work safely on rotating table 88, i.e. when shield 96 is open, even when the magazine is rotating and the machine is performing its operating schedule, the workman being shielded from possible throw of chips or coolant. Accordingly, dead times are further reduced.

In the operation of the apparatus as described above, while machining head 34 performs a set of operations on the row of workpieces which is in front of machining area MA, say row 92a-d, a workman 94 loads a new set of four workpieces on table 88, after unloading the row of brackets that were previously machined, say row 90a-d. Table 88 is then revolved by 180°, so that it will eventually place the new row of workpieces in the proper position with respect to the machining head. Then, the latter performs its work program on the new set of workpieces, while the workpieces previously machined are unloaded and replaced with other workpieces requiring machining, etc.

The workpieces will typically undergo two machining cycles: in a first cycle, drilling and/or threading is performed upon four workpieces simultaneously, by successive steps in D1, D2, D3 and D4, provided that the distance between spindles 52-58 is designed to be equal to the distance between two adjacent workpieces; in a second cycle, milling in M is performed simultaneously upon two alternate workpieces, the distance between spindles 46, 44 being in this case designed to be equal to the distance between two alternate workpieces. In such a second cycle, two successive steps will be therefore necessary to perform milling upon all four workpieces of a row. In a first step, machining head 34 is placed in a proper position to perform milling e.g. upon workpieces 92a and 92c; then, machining head 34 is driven by motor means 26 along axis X to take a new position that is proper to perform milling, in a second step, upon workpieces 92b and 92d.

It can be seen that the invention solves the stated problem, by providing an apparatus for machining brackets which is less cumbersome and more compact with respect to the known ones. With such a vertical arrangement of the spindles, the overall size of the apparatus is reduced and the distance between the working-edge of the tools and the guides supporting the machining head is minimized, enhancing the machining accuracy.

The above described preferred embodiment of the invention can of course undergo variations within the scope of the teachings given. In particular, workpiece-holding table 88 is not necessarily rotatable, or it might be replaced with another kind of swapping device, known in the art, such as one comprising a drum capable of rotating around a horizontal axis parallel to axis X and provided with motor means capable of driving the drum through tipping strokes between two alternative positions. Moreover, though the number of four high-speed spindles and two low-speed spindles for machining sets of four aligned workpieces results in practice to be the most convenient, obviously it can be varied according to the requirements.

## Claims

1. Apparatus for machining motorcar disk brake brackets and caliper blocks, comprising a tool-holding machining head (34), slidable along vertical guides (36) carried by a column movable along two horizontal axes (X, Z), with respect to a workpiece held on a workpiece-holding device (88), and a tool-changing magazine (82), **characterized in that**
the machining head (34) carries at least one vertical mill-holding spindle (44, 46) in a position horizontally nearer to the column (30) and at least two vertical drill-holding spindles (52-58) in a position farther from the column,
the tool-changing magazine (82) is arranged for cooperating with said drill-holding spindles (52-58) for changing their tools by moving the machine head.

2. The apparatus of claim 1, **characterized in that** the workpiece-holding device is adapted to carry two sets of workpieces (90a-d, 92a-d) and to alternatively shift them between a working position near the machining head (34) and a tool-changing position remote from the machining head (34).

3. The apparatus of claim 1 or 2, **characterized in that** said drill-holding spindles and said mill-holding spindle are driven by respective, separate motor means (42, 48, 50).

4. The apparatus of anyone of claims 1 to 3, **characterized in that** said machining head carries four drill-holding spindles (52-58), and **in that** said sets of workpieces (90a-d, 92a-d) each comprise four workpieces.

5. The apparatus of anyone of claims 1 to 4, **characterized in that** the motor means driving the drill-holding spindles (52-58) comprise two electric motors (48, 50), each driving two drill-holding spindles (52, 58) via first and second drive means (60, 62) respectively.

6. The apparatus of claim 5, **characterized in that** each one of said drive means is a belt (60, 62) engaging two adjacent drill-holding spindles (52, 54) and a different one of said electric motors (48, 50).

7. The apparatus of anyone of claims 1 to 6, **characterized in that** it comprises two mill-holding spindles (44, 46) driven by an electric motor (42) via third speed-reducing drive means (68, 70, 72).

8. The apparatus of claim 7, **characterized in that** said third drive means (68, 70, 72) comprise a pair of worm gearings (68, 70) each operating one of said mill-holding spindles (44, 46).

9. The apparatus of claim 8, **characterized in that** said worm gearings are driven together by a driving gearing (72) operated by said electric motor (42).

10. The apparatus of anyone of claims 1 to 9, **characterized in that** said mill-holding spindles (44, 46) are pivotally supported by a first housing (98) that is slidable along said vertical guides (36).

11. The apparatus of claim 10, **characterized in that** said drill-holding spindles (52-58) are pivotally supported by a second housing (100) attached to said first housing (98).

12. The apparatus of claim 11, **characterized in that** said drill-holding spindles (52-58) are supported at a raised position with respect to said mill-holding spindles (44, 46).

13. The apparatus of anyone of claims 2 to 12, **characterized in that** said workpiece-holding device is a horizontal table (88), which is adapted to support said sets of workpieces (90a-d, 92a-d) and is drivable to rotate around its vertical axis (A).

14. The apparatus of claim 13, **characterized in that** said workpiece-holding device comprises motor means driving said horizontal table (88) via a rack-and-pinion gearing.

15. The apparatus of claim 13 or 14, **characterized in that** said tool-changing magazine (82) comprises a drum (84) having a horizontal, transversal axis, for bringing different tools (86) into selective grasping by said drill-holding spindles (52-58), and arranged substantially above said horizontal table (88).
